# EUROPEAN PATENT SPECIFICATION

(11) **EP 2 646 392 B1**
(45) Date of publication and mention of the grant of the patent: **12.07.2017**
(21) Application number: 10787633.6
(22) Date of filing: 29.11.2010
(51) Int. Cl.: C04B 35/195, C04B 35/64, C04B 38/00

(54) **PROCESS FOR CONTROL OF CORDIERITE FILTER PROPERTIES**
VERFAHREN ZUR STEUERUNG VON CORDIERITFILTEREIGENSCHAFTEN
PROCÉDÉ POUR LE CONTRÔLE DES PROPRIÉTÉS DE FILTRES EN CORDIÉRITE

(43) Date of publication of application: 09.10.2013
(73) Proprietor: Corning Incorporated, Corning, New York 14831 (US)
(72) Inventor: CASTILONE, Robert J., Painted Post, New York 14870 (US); MAGEE, Cecilia S., Horseheads, New York 14845 (US); SPETSERIS, Mark A., Pine City, New York 14871 (US)
(74) Representative: Anderson, James Edward George
(86) International application number: PCT/US2010/058176
(87) International publication number: WO 2012/074504

(56) References cited:
- EP-A1- 1 270 531
- WO-A1-2009/029276
- WO-A2-2008/027219
- US-A1- 2007 119 134

## Description

### FIELD

The disclosure relates generally to manufacturing processes for controlling cordierite filter properties.

### BACKGROUND

Various methods are known for making engine exhaust emission reducing articles, including catalyst supports, or substrates, and filters.
WO 2009/029276 A1 (Custer) discloses a method of forming a porous ceramic article having a narrow pore distribution by heating a great body in a firing environment and raising the temperature to a peak temperature then reducing to a hold temperature. WO 2008/027219 A2 (Beall) discloses porous ceramic articles having a porosity of ≥45%, greater than 15% but less than 38% of the total porosity having a pore diameter of less than 10 µm and a CTE ≤ 6.0 x 10⁻⁷/°C (from 23°C to 800°C).

### SUMMARY

There is provided a process and method as defined in the independent claims. The disclosure provides manufacturing processes for making and controlling cordierite filter properties, such as thermo-mechanical properties and pore structure. The filter articles can be used, for example, in engine exhaust systems.

### BRIEF DESCRIPTION OF THE FIGURES

In embodiments of the disclosure:
Figs. 1 to 6 demonstrate differences between the first and second fire properties based on the first- and second-fire history.
Fig. 7 shows main-effect(s) plots of physical properties as a function of the first fire parameters for properties measured after the first and second fires.
Figs. 8 to 13 show, respectively, physical properties of twice-fired articles as a function of the second fire soak temperature.

### DETAILED DESCRIPTION

Various embodiments of the disclosure will be described in detail with reference to drawings, if any. Reference to various embodiments does not limit the scope of the invention, which is limited only by the scope of the claims. Additionally, any examples set forth in this specification are not limiting and merely set forth some of the many possible embodiments of the claimed invention.

In embodiments, the disclosed articles, and the method of making and use of the articles provide one or more advantageous features or aspects including, for example, as discussed below. Features or aspects recited in any of the claims are generally applicable to all facets of the invention. Any recited single or multiple feature or aspect in any one claim can be combined or permuted with any other recited feature or aspect in any other claim or claims.

### Definitions

"Porosity," and like terms generally refer to the total void space in a honeycomb material that can be attributed to the presence of pores and excludes the void space in a honeycomb material attributable to the presence of macroscopic channels or vias of the honeycomb, or the ratio of the pore volume to the total volume of a pulverized solid material, and may be expressed as percent porosity (%P). Porosity and its pore structure characterization, and like aspects of the ceramic bodies, are mentioned in commonly owned and assigned US 6,864,198. Parameters such as d₁₀, d₅₀ and d₉₀ relate to the pore size distribution. The quantity d₅₀ is the median pore size (MPS) based upon pore volume, and is measured in micrometers; thus, d₅₀ is the pore diameter at which 50% of the open porosity of the ceramic has been intruded by mercury as measured by mercury porosimetry. The quantity d₉₀ is the pore diameter at which 90% of the pore volume is comprised of pores whose diameters are smaller than the value of d₉₀; thus, d₉₀ is equal to the pore diameter at which 10% by volume of the open porosity of the ceramic has been intruded by mercury. The quantity d₁₀ is the pore diameter at which 10% of the pore volume is comprised of pores whose diameters are smaller than the value of d₁₀; thus, d₁₀ is equal to the pore diameter at which 90% by volume of the open porosity of the ceramic has been intruded by mercury. The values of d₁₀ and d₉₀ are also in units of micrometers. The quantity (d₅₀-d₁₀/d₅₀) describes the width of the distribution of pore sizes finer than the median pore size, d₅₀.

"Percent fine pore distribution" and like terms refer to the fractional amount, expressed as a percentage, of pores finer than specified pore diameter or dimension. Thus, for example, pores finer than 10 microns can be calculated by subtracting the mercury intruded volume at a pressure intended to fill all pores greater than or equal to 10 microns from the total intrusion volume and then dividing that difference by the total intrusion volume.

"Super additive," "super addition," and like terms generally refer to adding additional ingredients or materials to a batch composition or like formulation in excess of, or in addition to, a 100 wt% base inorganics formulation. A base formulation totaling 100 wt% can be, for example, a single inorganic material or combination of inorganic materials, and the super additives can be a mixture of pore formers, with or without other super additives, and can be present or added to the batch in, for example, from about 50 to about 300 wt% in addition to the base formulation 100 wt%.

"Parameter" or like terms refer to a variable quantity that can determine outcomes, for example, altering a parameter, such as soak temperature, can vary the properties of the resulting fired ceramic article.

"Protocol" or like terms refer to a detailed plan or procedure for accomplishing one or more of the disclosed firing steps.

"Include," "includes," or like terms means encompassing but not limited to, that is, inclusive and not exclusive.

"About" modifying, for example, the quantity of an ingredient in a composition, concentrations, volumes, process temperature, process time, yields, flow rates, pressures, and like values, and ranges thereof, employed in describing the embodiments of the disclosure, refers to variation in the numerical quantity that can occur, for example: through typical measuring and handling procedures used for making compositions, concentrates, or use formulations; through inadvertent error in these procedures; through differences in the manufacture, source, or purity of starting materials or ingredients used to carry out the methods; and like considerations. The term "about" also encompasses amounts that differ due to aging of a composition or formulation with a particular initial concentration or mixture, and amounts that differ due to mixing or processing a composition or formulation with a particular initial concentration or mixture. The appended claims include equivalents of these "about" quantities.

"Consisting essentially of" in embodiments refers, for example, to a filter article having, for example, predetermined physical properties such as pore structure, to a method of making a filter article and precursors thereto, devices incorporating the filter article, and can include the components or steps listed in the claim, plus other components or steps that do not materially affect the basic and novel properties of the compositions, articles, apparatus, or methods of making and use of the disclosure, such as particular reactants, particular additives or ingredients, a particular agents, a particular surface modifier or condition, or like structure, material, or process variable selected. Items that may materially affect the basic properties of the components or steps of the disclosure or that may impart undesirable characteristics to the present disclosure include, for example, an article having significantly different porosity, and methods of making having firing specifications that are beyond the values, including intermediate values and ranges, defined and specified herein.

The indefinite article "a" or "an" and its corresponding definite article "the" as used herein means at least one, or one or more, unless specified otherwise.

Abbreviations, which are well known to one of ordinary skill in the art, may be used (e.g., "h" or "hr" for hour or hours, "g" or "gm" for gram(s), "mL" for milliliters, and "rt" for room temperature, "nm" for nanometers, and like abbreviations).

Specific and preferred values disclosed for components, ingredients, additives, and like aspects, and ranges thereof, are for illustration only; they do not exclude other defined values or other values within defined ranges. The compositions, apparatus, and methods of the disclosure can include any value or any combination of the values, specific values, more specific values, and preferred values described herein.

In embodiments, the disclosure provides a process or method for preparing a cordierite filter article including a first and a second firing step wherein first parameters and second fire parameter are selected to achieve a targeted combination of filter properties, such as median pore size (MPS), total intrusion volume (TIV), percent of pores finer than 10 micrometers (PFT10um), coefficient of thermal expansion (CTE), modulus of rupture (MOR), and modulus of elasticity (Emod).

In embodiments, the disclosure provides a process or method for preparing a cordierite filter article including:
a first firing of an extruded green body batch composition with first fire parameters comprising ramp rate, soak temperature, and soak time, to provide a first fired article having a first set of hydrodynamic and thermo-mechanical properties; and
a second firing of the first fired article with a second fire parameter comprising soak temperature to provide a second fired article having a second set of hydrodynamic and thermo-mechanical properties.

In embodiments, the first fire parameters include ramp rates that can be, for example, from 1160 °C to 1350 °C for 36 °C/hr to 92 °C/hr, the soak time can be, for example, from 9 hrs to 21 hrs, and the soak temperature can be, for example, from 1403 °C to 1434 °C. The foregoing parameters can be selected to provide hydrodynamic filter properties comprising MPS of about 17 to about 21 microns, and pore fines of about 4 to about 18 percent less than 10 microns, and thermo-mechanical properties comprise a CTE of from about 2.5 to about 9, MOR of about 260 to about 440, and Emod of about 0.4 to about 0.7, including intermediate values and ranges.

In embodiments, the first fire ramp rates can be, for example, from 1160 °C to 1350 °C at 50 °C/hr to 68 °C/hr, the soak time can be, for example, from 11 hrs to 13 hrs, and the soak temperatures can be, for example, from 1418 °C to 1431 °C, and the second fire soak can have a temperature, for example, of 1410 °C to 1425 °C, to provide hydrodynamic filter properties comprising MPS of about 18.5 to about 20.5 microns, and pore fines of about 4 to about 8 percent less than 10 microns, and thermo-mechanical properties comprising CTE of from about 2.5 to about 5, MOR of about 260 to about 325, and Emod of about 0.45 to about 0.55, including intermediate values and ranges.

In embodiments, the disclosure provides a process or method for preparing a cordierite filter article comprising selecting an extruded green body batch composition and accomplishing a first fire using parameters including, ramp rate, soak temperature, soak time, or a combination thereof, to achieve a desired hydrodynamic properties including MPS, TIV, and PFT10um, and nominal pore structure; and then accomplishing a second fire using the peak soak temperature, to achieve desired thermo-mechanical properties including CTE, MOR, and Emod, and to further define the pore structure, that is, reducing the fine porosity content resulting from the first fire. In embodiments, the disclosure provides a process where the first fire ramp rate, soak time, and peak soak temperature, are selected to achieve target hydrodynamic filter properties selected, for example, from median pore size (MPS), percent of pores finer than 10 micrometers (PTF10µm), and total intrusion volume (TIV). For example, a fast heating ramp rate of about 65°C/hour, and high peak soak temperature of about 1410 °C to about 1430 °C, in the first fire produces a high MPS of about 20 microns, and low percentage, for example, of less than about 5% to 15% of the total porosity or pores finer than 10 microns after the second fire. The second fire peak soak temperature can be selected to provide a desired pore structure. For example, a high peak soak temperature of about 1410 °C to about 1430 °C, or for example about 1425°C compared to a low soak temperature, for example, of about 1400°C, can further reduce the percentage of pores finer than 10 microns, for example, by about 0 to about 5%. The second pore properties can comprise a median pore size of from about 12 to about 25 microns, from about 15 to about 22 microns, and from about 17 to about 21 microns, including intermediate values and ranges. Particularly useful fine porosity comprises pores finer than 10 microns of about 3% to about 10% of the total porosity.

In embodiments, the second fire soak temperature can be selected to improve the thermo-dynamic filter properties selected from CTE, MOR, and Emod, for a particular application. For example, a low soak temperature of about 1400°C can be selected to achieve a low CTE, for example, of about 3.5 x 10⁻⁷/C and a low Emod, for example, of about 0.5 x 10⁶ psi.

In embodiments, the disclosure provides a process for preparing a cordierite filter article, comprising:
a first firing of an extruded green body batch composition with first parameters comprising ramp rate, soak temperature, and soak time to provide a first fired article having a first pore structure; and
a second firing of the first fired article with a second parameter comprising soak temperature to provide a second fired article having a second pore structure.

The first and second fire parameters can be selected to achieve target hydrodynamic filter properties selected, for example, from median pore size (MPS), percent of pores finer than 10 micrometers (PTF10µm), and total intrusion volume (TIV), and to achieve desired thermo-mechanical properties such as coefficient of thermal expansion (CTE), modulus of rupture (MOR), and modulus of elasticity (Emod), as defined herein, and to further transform the pore structure, that is, reducing the fine porosity content resulting from the first fire. The second pore structure can have reduced fine porosity compared to the first pore structure.

In embodiments, the ramp rate, soak time, and soak temperature of the first-fire can be selected to provide desired hydrodynamic filter properties, for example, high MPS and low pore fines. In one exemplary example, a fast heating ramp (e.g., about 65°C/hour) and high soak temperature (e.g., about 1425 °C) provides high MPS (e.g., about 20 microns) and low percentage of pores finer than 10 microns (e.g., at or below about 5% of the total pore volume).

In embodiments, the second firing can provide target thermo-mechanical properties including, for example, the coefficient of thermal expansion (CTE), the modulus of rupture (MOR), the modulus of elasticity (Emod), or combinations thereof. The second fire soak temperature can be, for example, about 1425°C and can be selected to provide a pore structure having a reduced percentage of pore fines. For example, a high soak temperature (e.g., about 1425°C) over a low soak temperature (about 1400°C) can further reduce the percentage of pore fines less than 10 microns, such as a reduction of about 3 percent.

In embodiments, the disclosure provides a process for preparing a cordierite filter article, comprising:
selecting an extruded green body batch composition and accomplishing a first firing at selected first parameters to provide a first-fired article having first pore properties; and
a second firing of the resulting first-fired article at selected second parameter to provide a second-fired article having thermo-mechanical properties and having second pore properties.

The first parameters can be, for example, at least one ramp rate, the soak time, the soak temperature, or a combination thereof, and the first pore structure can be, for example, a median pore size of from about 17 to about 20 microns.

The second parameter can be, for example, the soak temperature, and the second-fired article can have, for example, thermo-mechanical properties selected from the coefficient of thermal expansion (CTE), modulus of rupture (MOR), and modulus of elasticity (Emod), or a combination thereof, and the second pore properties can be, for example, a median pore size of from about 17 to about 20 microns having a reduced fine porosity of pores finer than 10 microns of, for example, less than or equal to 5%.

In embodiments, the first firing can primarily control the pore properties of the article. In contrast, the second firing can control, for example, the thermo-mechanical properties of the article, reduce the variability of the thermo-mechanical properties, and can reduce the fine porosity pore structure properties of the article by, for example, from about 5 to about 15% of the total porosity compared to the porosity prior to the second firing.

A single-fire process for preparing a cordierite filter article may include, for example: once-firing of an extruded green body batch composition with first fire parameters comprising ramp rate, soak temperature, and soak time, to provide a first fired article, wherein the thermo-mechanical properties of the resulting fired article resemble the properties of the aforementioned two-fire process, wherein the ramp rate is decreased from about 1160 °C to about 1350 °C from 0 °C/hr to 20 °C/hr, the soak temperature is increased by 0 °C to 5 °C, and the soak time is increase by 0 hrs to 8 hrs, including intermediate values and ranges, compared to the aforementioned first firing of the two-fire process.

A single-fire process for preparing a cordierite filter article, may include, for example: firing of an extruded green body batch composition with first fire parameters comprising ramp rate, soak temperature, and soak time, to provide a first fired article, wherein the hydrodynamic properties of the resulting fired article resemble the properties of the aforementioned two-fire process, wherein the 1160 °C to 1350 °C ramp rate is increased by 0 °C/hr to 20 °C/hr, the soak temperature is increased by 0 °C to 10 °C, and the soak time is decreased by 0 hrs to 8 hrs, including intermediate values and ranges, compared to the first firing of the aforementioned two-fire process.

In embodiments, the disclosure provides a method of making a ceramic honeycomb article, comprising:
providing a plasticized cordierite precursor batch composition containing:
   inorganic batch components selected, for example, from a magnesium oxide source, an alumina-forming source, a silica-forming source, or a combination thereof; a pore former having a median particle diameter greater than 40 microns; a liquid vehicle; and a binder;
forming a honeycomb green body from the plasticized cordierite precursor batch composition;
accomplishing a first firing of the honeycomb green body effective to convert the honeycomb green body into a ceramic honeycomb article containing cordierite; and
accomplishing a second firing of the honeycomb green body effective to produce a total porosity greater than about 42% and less than about 56%, and a pore size distribution where less than about 5% of the total porosity has a pore diameter less than 10 microns.

Cordierite filters can be fired using either a one-step firing process, or a two-step firing process. In one two-step process a first fire-step fires the matrix to accomplish cordierite conversion, then alternating cells can be plugged to create a flow-through filter. In a second fire-step the filter is fired again to sinter the plugs to the cellular matrix. Top temperatures are comparable in each of the first and second firings. It was previously believed that the second firing step had little effect on the physical properties on the filter, that is, the physical properties were believed to be largely set by the first firing. However, the disclosed methods demonstrate that for hydrodynamic properties, i.e., median pore size (MPS), percent of pores finer than 10 micrometers (PTF10µm), and total intrusion volume (TIV), the second fire step has little or no effect on those properties for a given second fire condition. However, for thermo-mechanical properties, i.e., coefficient of thermal expansion (CTE), modulus of rupture (MOR), and modulus of elasticity (Emod), the second fire step can be an important property setting step. Not controlling top temperature in the second fire step can result in excessive property variability. Because the disclosed two-step firing process creates different property combinations than the same first fire step alone, moving to a single-step firing process would require that the firing protocol to be changed to achieve a comparable combination of properties. A model was generated based on experimental firing results that allow firing parameters to be defined that can achieve selected thermo-mechanical properties.

In embodiments, the disclosure provides a two-step firing process (first and second fire) for preparing cordierite filters. A conventional view suggested that both hydrodynamic and thermo-mechanical properties are primarily determined by parameters in the first fire step, and that a second fire step with a similar soak temperature has little effect on the hydrodynamic and thermo-mechanical properties. During experiments for making cordierite filters it was discovered that the conventional view was incorrect for certain properties. This suggested that the first fire parameters, in principle, could be used to control hydrodynamic properties, while the second fire parameters could be used to control thermo-mechanical properties, allowing for superior filter properties to be obtained from the two-step firing process. It has been discovered that the thermo-mechanical properties are primarily set by the second fire soak temperature. One application of this discovery is that a large range of first-fire thermo-mechanical properties can be controlled, such as porous fines reduction with a well controlled second fire condition. For cordierite filters prepared with the disclosed two-step firing process, one can use first fire parameters (e.g., ramp rates, soak time, soak temperature) to attain desired pore structure, and then the second fire parameters can be used to achieve, for example, thermo-mechanical properties and further reduce the percentage of pores less than 10 microns. The use of the disclosed two-step firing process permits one to obtain filter articles having a combination of properties that for a given composition might be difficult to attain in a single-fire process. Examples of such filter article property combinations include, for example, a coarse pore size and low CTE, or alternatively, for the same composition fine pore size and low CTE.

Alternately, if a single-fire process is selected for the same initial composition, then one can simply use the same first-fire protocol to obtain different properties than obtained in the two-step firing process. For a single-fire process, a model generated from experimental firing results can be used to determine and select a single-firing schedule that provides properties that can closely approximate a two-step firing property combination.

When attempting to control properties through the first fire alone, parameter set-points that are advantageous for one property can be detrimental to another property for a given set of batch ingredients and a given set of desired physical properties. For example, the 1160 °C to 1350 °C heating rate should be fast to achieve a low percentage of pores finer than 10 microns, but this same heating rate will result in an increase of CTE compared to a slower heating rate. For this same set of batch ingredients, a shorter soak time also aids in achieving a low percentage of pores finer than 10 microns, but this results in a higher CTE than would occur with a longer soak time.

Also, the first-fire can be tailored to match the capabilities of a particular kiln configuration used for first fire, and then a second fire can be used to achieve selected properties, for example, thermo-mechanical and the fine-end of the pore size distribution. For example, to obtain a good pore size uniformity as a function of kiln location, it may be necessary in a first-fire to fire slowly in the property forming region (e.g., about 1,150 °C through soak), which for some compositions can result in a higher then desired coefficient of thermal expansion (CTE). The second fire condition can then be selected to reduce the CTE. Also, if a first fire kiln configuration has thermal non-uniformity to the extent that the CTE varies to an undesirable level as a function of kiln location, then having a second fire condition with uniform top hold temperatures can reduce the CTE variability to desired levels. In embodiments, use of the disclosed two-step process can provide superior filter properties as illustrated and demonstrated herein.

In embodiments the disclosure provides a two-step firing process where the first fire parameters are selected to determine pore structure and the second fire parameters are selected to determine thermo-mechanical properties and further refine pore structure. The effect of heating and cooling rates, soak temperature, and soak time has been discussed (see commonly owned and assigned US 7,485,170 and EP 1270531). However, the prior discussions do not mention the combined use of a first and a second fire parameter to deterministically obtain superior properties, for example, using the second fire to dampen or reduce property variability, or the use of the second fire as a property determiner.

The disclosed process was further demonstrated in two experiments. In the first experiment, extruded green body cordierite parts comprised of the batch compositions listed in Table 1 were first fired in a statistical matrix experiment (2⁶⁻² with center, star points, and various other protocols of interest - see Table 2) to study the influence, if any, of the first fire parameters, and then the cordierite parts were second fired using the standard 1,403 °C soak temperature.

**Table 1. Green body batch composition.**

| **Ingredient** | **Weight percent** |
|---|---|
| Talc | 41 |
| Silica | 14 |
| Alumina | 15 |
| Hydrated Alumina | 19 |
| Clay | 12 |
| Pore former - potato starch | 10 (by super addition based on 100 wt% inorganics) |
| Binder - Methylcellulose | 4 (by super addition based on 100 wt% inorganics) |
| Lubricant - Sodium Stearate | 1 (by super addition based on 100 wt% inorganics) |

In the second experiment, the first fire parameters were held constant and the second fire soak temperature was varied (see Table 2).

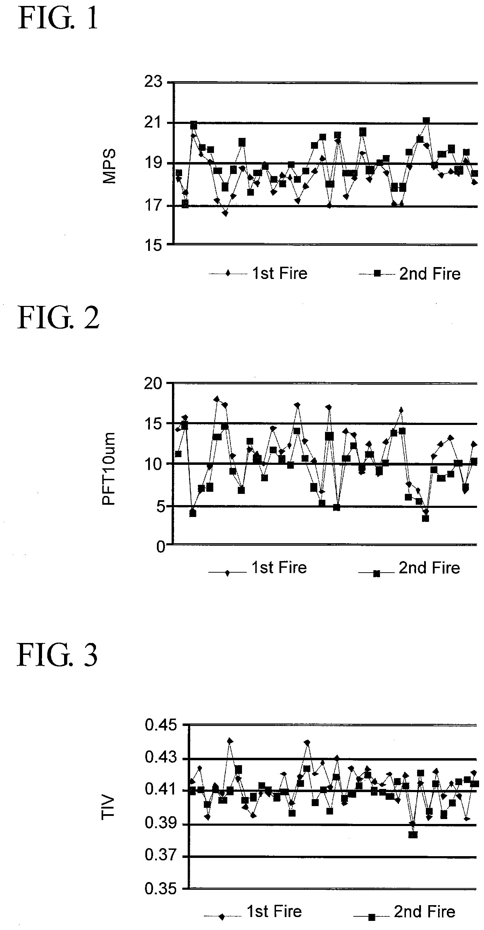

General trends noted from the experiments are discussed below and illustrated in the Figs. 1 to 13:

Increases in the first fire heating ramp rates and the first fire soak temperature increased the MPS and reduced the fine porosity. These trends remained after the second fire. Smaller, yet significant, increases in pore size were obtained by increasing the second fire soak temperature.

Total intrusion volume (TIV) decreased significantly as the second fire soak temperature increased, meaning that good thermal uniformity in the second fire condition can be used to maintain low TIV variation as a function of kiln location, i.e., the location of the piece or ware within the kiln.

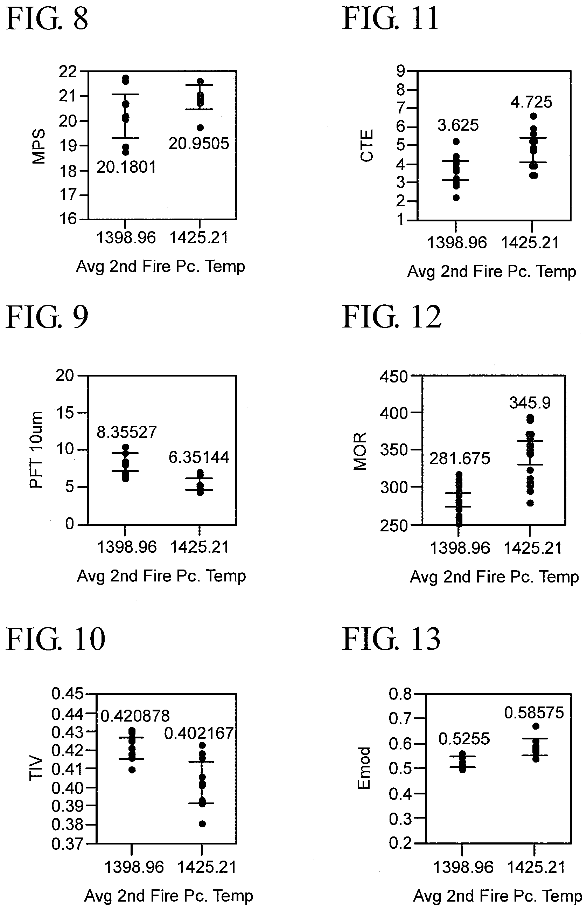

Increased first fire heating ramp rates or a reduced first fire soak temperature and the soak time were observed to increase the CTE, MOR, and Emod as measured after the first fire. These trends did not remain after the second fire. Nearly all the variability created by various first fires was eliminated. Increasing the second fire soak temperature significantly increased the observed CTE, MOR, and Emod (see Figs. 11 to 13).

Multi-variable regression analysis from the first experiment also indicated the presence of interactions and quadratic effects. However, due to the quarter factorial design of the experiment, secondary effects were confounded.

An advantage of the disclosed method over a single-step firing process or a process in which the effect of the second fire on properties is largely ignored is that desired property combinations can be readily achieved. For example, the disclosed process allows pore structure and thermo-mechanical properties to be predetermined substantially independently of one another. For instance, if a large, for example, greater than about 20 microns median pore size (MPS) is desired, a fast, for example, greater than about 75°C/hr heating ramp and high, for example, greater than about 1,425 °C soak temperature can be used in the first fire with little or no influence on the second fire CTE. Further, if a low, for example, less than about 4x10⁻⁷/C CTE is desired, a low-temperature, for example, 1,400 °C second fire can be used with a relatively small effect on MPS.

Table 2 lists average median pore size in microns (MPS), percent of pores less than 10 microns (PFT10µm), total intrusion volume in cc/g (TIV), co-efficient of thermal expansion in 10⁻⁷/C (CTE), modulus of rupture in psi (MOR), and modulus of elasticity in psi x10⁻⁶ (Emod) for each run in the first experiment. Parts were fired using a variety of first fire parameters (see columns 2 through 6 for actual parameters as measured by thermocouple). The second fire parameters were held constant (1,403 °C peak soak temperature). Properties were measured after the first fire and again after the second fire. Data is presented graphically in Figs. 1 to 6. The terms "1/4 Factorial," "Center," "Low Star," "High Star," and like statistical terms in Table 2 are known to those skilled in statistical analysis, see for example, "Introduction to Mathematical Statistics and Its Applications," Larsen and Marx, 3rd Ed, ISBN 0-13-922303-7.

**Table 2.**

| | **Temperature (Thermocouple)** | | | | | **First Fire** | | | | | | **Second Fire** | | | | | |
|---|---|---|---|---|---|---|---|---|---|---|---|---|---|---|---|---|---|
| **Recipe Description** | **Ramp 1200-1350 (C/hr)** | **Ramp 1350-Soak (C/hr)** | **Ramp Soak-1000 (C/hr)** | **Soak Temp (C)** | **Soak Time (hr)** | **MPS** | **PFT 10um** | **TIV** | **CTE** | **MOR** | **Emod** | **MPS** | **PFT 10um** | **TIV** | **CTE** | **MOR** | **Emod** |
| | 40 | 30 | -35 | 1412 | 15 | 17.2 | 18.0 | 0.441 | 4.0 | 280 | 0.45 | 18.7 | 13.3 | 0.411 | 3.1 | 285 | 0.49 |
| | 60 | 34 | -35 | 1421 | 19 | 19.1 | 9.6 | 0.408 | 3.7 | 270 | 0.42 | 19.7 | 7.2 | 0.405 | 3.2 | 285 | 0.50 |
| 1/4 Factorial | 40 | 30 | -102 | 1405 | 18 | 16.6 | 17.1 | 0.418 | 5.1 | 313 | 0.56 | 17.9 | 14.4 | 0.423 | 3.5 | 308 | 0.49 |
| 1/4 Factorial | 64 | 30 | -35 | 1407 | 12 | 17.4 | 10.9 | 0.400 | 8.6 | 407 | 0.70 | 18.7 | 9.0 | 0.405 | 4.4 | 310 | 0.51 |
| 1/4 Factorial | 63 | 31 | -103 | 1420 | 12 | 18.8 | 7.1 | 0.395 | 5.2 | 328 | 0.57 | 20.0 | 6.8 | 0.407 | 3.4 | 295 | 0.49 |
| 1/4 Factorial | 40 | 59 | -105 | 1407 | 12 | 18.3 | 11.7 | 0.408 | 6.9 | 393 | 0.64 | 17.6 | 12.8 | 0.413 | 3.5 | 283 | 0.52 |
| 1/4 Factorial | 65 | 30 | -102 | 1407 | 18 | 18.0 | 11.2 | 0.408 | 5.8 | 344 | 0.58 | 18.6 | 10.5 | 0.411 | 3.8 | 307 | 0.50 |
| 1/4 Factorial | 40 | 58 | -103 | 1420 | 18 | 19.0 | 9.9 | 0.406 | 3.8 | 305 | 0.54 | 18.8 | 8.4 | 0.407 | 3.1 | 281 | 0.49 |
| 1/4 Factorial | 40 | 30 | -103 | 1425 | 12 | 18.4 | 11.6 | 0.403 | 4.5 | 325 | 0.58 | 18.0 | 10.6 | 0.397 | 3.5 | 307 | 0.52 |
| 1/4 Factorial | 65 | 61 | -35 | 1410 | 18 | 18.3 | 12.3 | 0.419 | 5.5 | 337 | 0.56 | 18.9 | 9.8 | 0.415 | 4.0 | 282 | 0.47 |
| 1/4 Factorial | 41 | 59 | -34 | 1410 | 18 | 17.2 | 17.1 | 0.440 | 4.3 | 270 | 0.48 | 18.2 | 13.9 | 0.424 | 3.2 | 294 | 0.47 |
| 1/4 Factorial | 41 | 59 | -35 | 1425 | 12 | 17.8 | 12.7 | 0.421 | 4.0 | 279 | 0.53 | 18.6 | 10.8 | 0.403 | 3.3 | 304 | 0.53 |
| 1/4 Factorial | 64 | 30 | -35 | 1425 | 18 | 18.7 | 10.3 | 0.427 | 3.3 | 277 | 0.45 | 19.9 | 7.1 | 0.411 | 2.8 | 284 | 0.46 |
| 1/4 Factorial | 65 | 62 | -35 | 1427 | 12 | 19.2 | 6.6 | 0.412 | 4.7 | 294 | 0.49 | 20.3 | 5.2 | 0.398 | 2.8 | 287 | 0.44 |
| 1/4 Factorial | 41 | 31 | -36 | 1418 | 18 | 17.0 | 17.1 | 0.430 | 3.5 | 257 | 0.45 | 18.0 | 13.4 | 0.419 | 3.3 | 299 | 0.47 |
| 1/4 Factorial | 65 | 59 | -103 | 1425 | 12 | 20.1 | 4.8 | 0.402 | 6.0 | 341 | 0.55 | 20.4 | 4.7 | 0.406 | 3.6 | 285 | 0.47 |
| 1/4 Factorial | 65 | 61 | -105 | 1428 | 12 | 19.9 | 4.1 | 0.394 | 5.2 | 349 | 0.49 | 21.1 | 3.4 | 0.398 | 3.4 | 316 | 0.48 |
| 1/4 Factorial | 66 | 62 | -103 | 1412 | 12 | 19.2 | 6.9 | 0.393 | 8.3 | 394 | 0.61 | 19.6 | 7.4 | 0.418 | 4.7 | 333 | 0.50 |
| | 64 | 58 | -104 | 1424 | 18 | 20.4 | 4.1 | 0.394 | 4.4 | 302 | 0.52 | 20.9 | 4.0 | 0.402 | 2.6 | 276 | 0.47 |
| | 40 | 31 | -35 | 1407 | 12 | 17.5 | 15.6 | 0.425 | 8.3 | 440 | 0.68 | 17.0 | 14.7 | 0.411 | 3.3 | 286 | 0.52 |
| | 50 | 40 | -52 | 1417 | 15 | 18.3 | 13.6 | 0.418 | 5.0 | 321 | 0.50 | 18.5 | 12.3 | 0.414 | 4.2 | 314 | 0.52 |
| | 64 | 62 | -102 | 1420 | 15 | 19.4 | 6.6 | 0.413 | 4.8 | 347 | 0.53 | 19.8 | 7.1 | 0.411 | 3.2 | 266 | 0.46 |
| Center | 50 | 39 | -52 | 1416 | 15 | 18.3 | 14.2 | 0.416 | 4.7 | 303 | 0.46 | 18.6 | 11.1 | 0.411 | 2.8 | 274 | 0.49 |
| Center | 50 | 41 | -52 | 1417 | 15 | 17.4 | 14.0 | 0.425 | 4.6 | 341 | 0.55 | 18.5 | 10.8 | 0.409 | 3.3 | 309 | 0.49 |
| Center | 49 | 41 | -52 | 1420 | 15 | 18.2 | 12.4 | 0.416 | 4.7 | 322 | 0.52 | 18.7 | 11.1 | 0.410 | 3.7 | 309 | 0.51 |
| | 50 | 40 | -52 | 1412 | 15 | 17.6 | 14.4 | 0.420 | 5.2 | 319 | 0.54 | 18.3 | 11.7 | 0.409 | 4.1 | 308 | 0.50 |
| Low Star 1200-1350 | 36 | 40 | -52 | 1420 | 15 | 17.1 | 16.6 | 0.420 | 4.1 | 300 | 0.51 | 17.8 | 14.0 | 0.414 | 3.3 | 315 | 0.53 |
| High Star 1200-1350 | 92 | 43 | -52 | 1420 | 15 | 20.3 | 6.9 | 0.415 | 7.4 | 372 | 0.58 | 20.2 | 5.4 | 0.422 | 3.9 | 300 | 0.44 |
| High Star 1350-Soak | 51 | 83 | -52 | 1419 | 15 | 18.9 | 11.0 | 0.423 | 5.4 | 340 | 0.53 | 18.9 | 9.4 | 0.415 | 4.2 | 332 | 0.51 |
| Low Star 1350-Soak | 53 | 24 | -53 | 1420 | 15 | 18.1 | 12.5 | 0.422 | 4.1 | 295 | 0.51 | 18.6 | 10.4 | 0.415 | 3.6 | 321 | 0.47 |
| High Star Soak-1000 | 50 | 41 | -204 | 1420 | 15 | 18.5 | 10.2 | 0.408 | 5.1 | 342 | 0.57 | 18.7 | 10.2 | 0.416 | 3.3 | 334 | 0.53 |
| Low Star Soak-1000 | 50 | 39 | -26 | 1418 | 15 | 18.6 | 13.3 | 0.415 | 4.2 | 257 | 0.45 | 19.8 | 8.8 | 0.403 | 3.5 | 310 | 0.47 |
| Low Star Temp | 50 | 41 | -52 | 1403 | 15 | 17.0 | 13.9 | 0.404 | 7.5 | 435 | 0.71 | 17.9 | 13.8 | 0.416 | 4.5 | 332 | 0.53 |
| High Star Temp | 49 | 39 | -52 | 1434 | 15 | 18.8 | 7.5 | 0.390 | 3.4 | 312 | 0.56 | 19.6 | 6.0 | 0.384 | 3.0 | 320 | 0.48 |
| Low Star Time | 51 | 39 | -52 | 1417 | 9 | 19.0 | 9.0 | 0.414 | 8.4 | 421 | 0.65 | 19.0 | 9.2 | 0.409 | 4.6 | 328 | 0.52 |
| High Star Time | 51 | 40 | -51 | 1419 | 21 | 18.5 | 12.6 | 0.421 | 3.5 | 299 | 0.48 | 19.3 | 10.1 | 0.407 | 3.1 | 299 | 0.50 |
| max | 92 | 83 | -26 | 1434 | 21 | 20.4 | 18 | 0.44 | 9 | 440 | 0.7 | 21.1 | 15 | 0.42 | 5 | 334 | 0.5 |
| min | 36 | 24 | -204 | 1403 | 9 | 16.6 | 4 | 0.39 | 3 | 257 | 0.4 | 17.0 | 3 | 0.38 | 3 | 266 | 0.4 |

Table 3 lists average median pore size (MPS) in microns, percent of pores less than 10 microns (PFT10um) total intrusion volume (TIV) in cc/g, co-efficient of thermal expansion (CTE) in 10⁻⁷/C, modulus of rupture (MOR) in psi, and modulus of elasticity(Emod) in psi x 10⁻⁶ for two second fire soak temperatures. The first fire parameters were held constant. This data is presented graphically in Figs. 8 to 13.

**Table 3.**

| **Second Fire Soak Temp (deg C)** | **MPS** | **PFT 10um** | **TIV** | **CTE** | **MOR** | **Emod** |
|---|---|---|---|---|---|---|
| 1,399 | 20.2 | 8.4 | 0.421 | 3.625 | 282 | 0.53 |
| 1,425 | 21.0 | 5.4 | 0.402 | 4.725 | 346 | 0.59 |

### EXAMPLES

The following examples serve to more fully describe the manner of using the above-described disclosure, and to further set forth best modes contemplated for carrying out various aspects of the disclosure. It is understood that these examples do not limit the scope of this disclosure, but rather are presented for illustrative purposes. The working examples further describe how to prepare the porous filter articles of the disclosure.

**Preparation of a green body** A green body can be prepared according to US Patent Nos. 5,332,703, entitled "Batch Compositions for Cordierite Ceramics," and 6,221,308, entitled "Method of Making Fired Bodies," both assigned to Corning, Inc., and as modified according to the present disclosure.

### Example 1

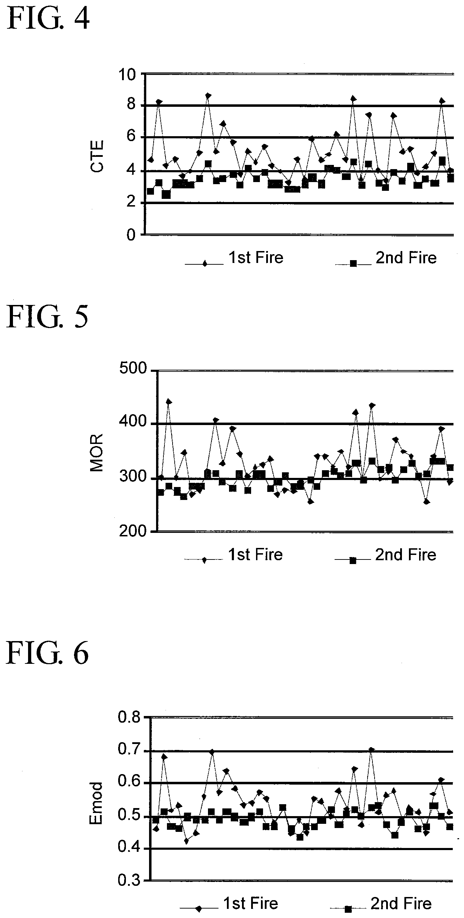

**First fire parameters study** A wide variety of pore structures were created by the various first fire parameter combinations (see Figs. 1 to 3). Although second fire conditions shifted the porosity metrics, the same general trends were seen after both the first and the second fire. Conversely, thermo-mechanical properties (CTE, MOR, and Emod) changed significantly from the first to the second fire (see Figs. 4 to 6). The variability in thermo-mechanical properties generated by the various combinations of the first fire parameters was significantly diminished by the second fire.

Figs. 1 to 6 demonstrate the differences between the first and second Fire properties. Specifically, Figs. 1 to 6 show, respectively, average median pore size in microns (MPS), percent of pores less than 10 microns (PFT10um), total intrusion volume in cc/g (TIV), co-efficient of thermal expansion in 10⁻⁷/C (CTE), modulus of rupture in psi (MOR), and modulus of elasticity in psi x 10⁻⁶ (Emod) for a variety of the first fire protocols (procedures are listed in Table 2). Each point represents a different first fire lot in which ramp rates in the property forming region, peak soak temperature, and peak soak time were varied. Wares from the various first fire protocols were then placed into a standard second fire cycle (1,403 °C peak soak temperature). The second fire parameter (peak soak temperature) was held constant. Properties were measured after the first fire and again after the second fire.

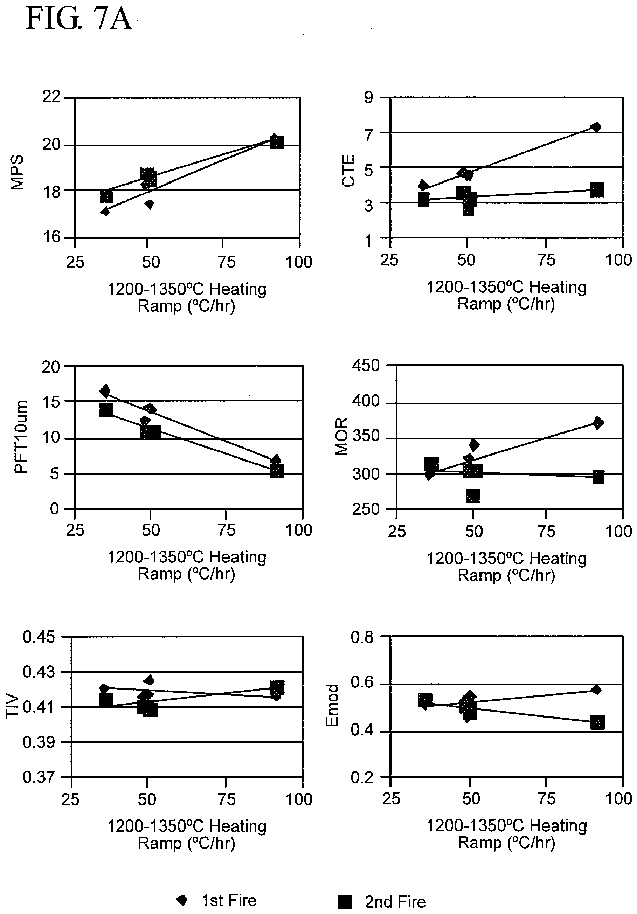

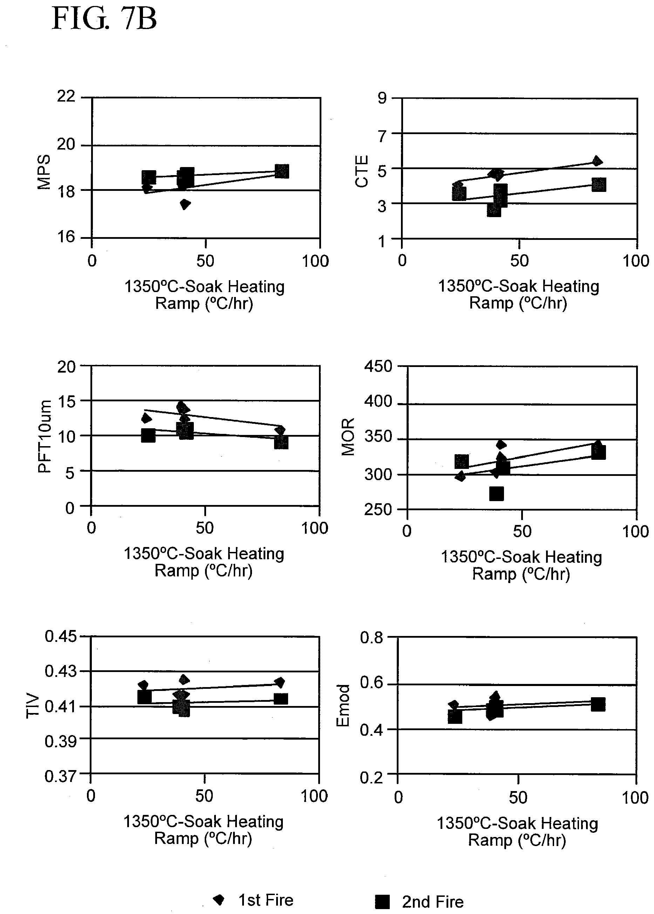

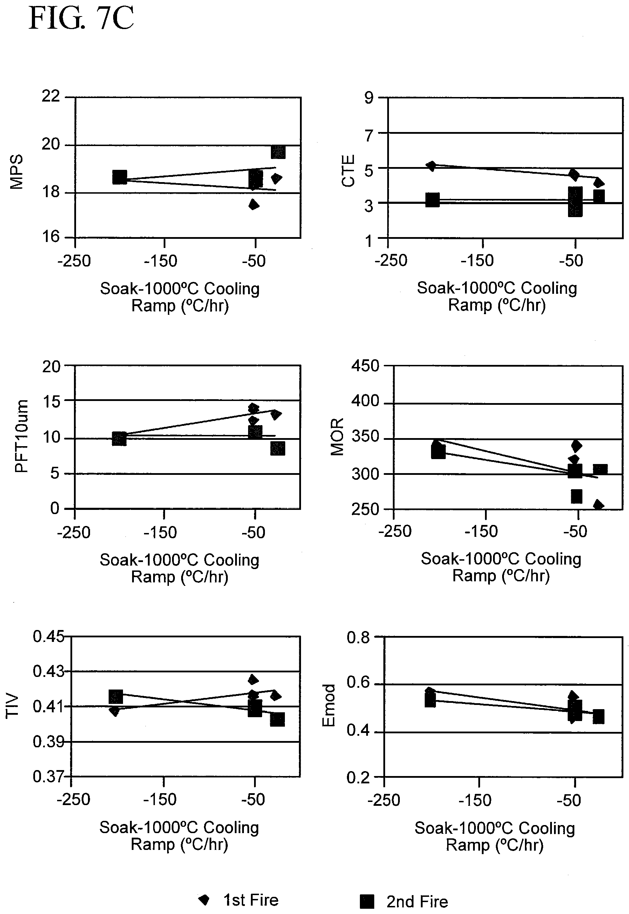

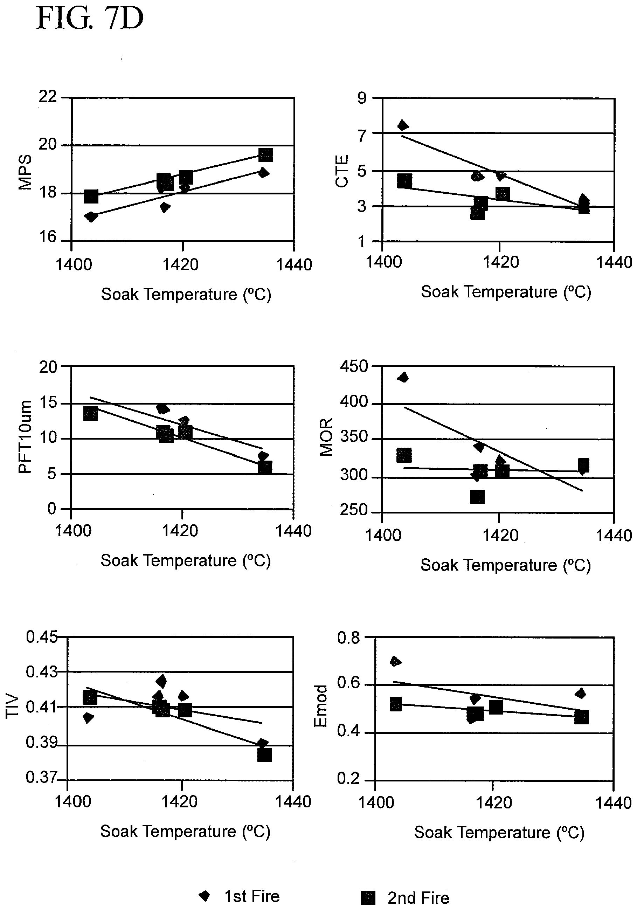

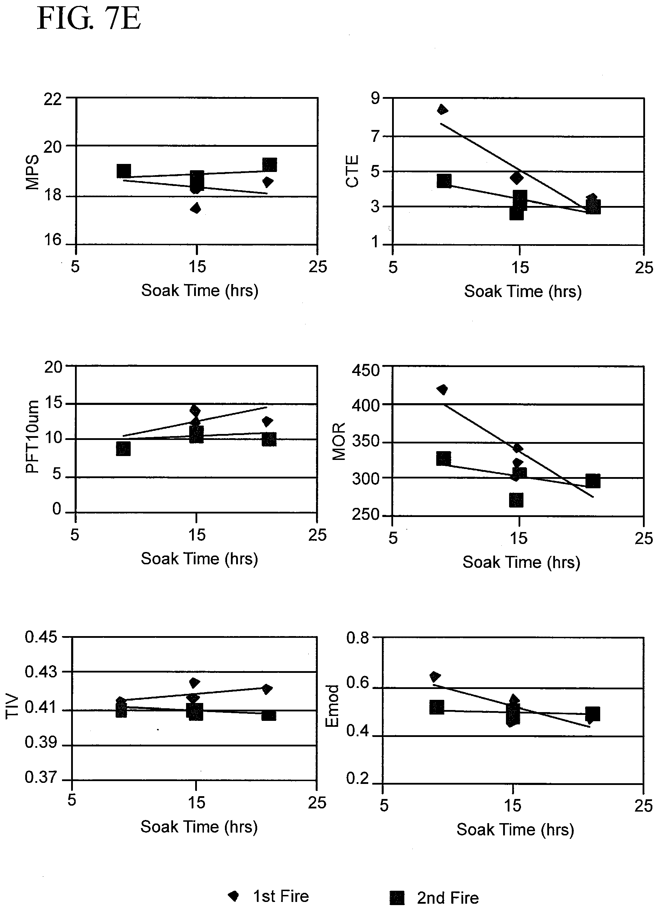

Main-effect(s) plots of properties as a function of the first fire parameters also showed that the second fire significantly dampens the effects of the first fire thermo-mechanical differences (Fig. 7). These plots also show the effect of the first fire parameters on properties.

Fig. 7 shows the average median pore size in microns (MPS), percent of pores less than 10 microns (PFT10um), total intrusion volume in cc/g (TIV), co-efficient of thermal expansion in 10⁻⁷/C (CTE), modulus of rupture in psi (MOR), and modulus of elasticity in psi x 10⁶ (Emod), as a function of the first fire parameters. Each point represents a different first fire lot in which ramp rates in the property forming region, peak soak temperature, and peak soak time were varied. The second fire parameter was held constant (1,403 °C peak soak temperature). Properties were measured after the first fire and again after the second fire. The data was selected from the same data set used for Figs. 1 to 6. Only the statistically generated "star" and "center" points are represented as discussed above for Table 2.

### Example 2

**First fire temperature constant - second fire parameter (i.e., peak soak temperature) varied** When the first fire parameters were held constant and the second fire parameter (peak soak temperature) was varied, the ability to modify selected properties by changing the second fire parameter was demonstrated. Increasing the second fire soak temperature increased the MPS, the CTE, the MOR, and the Emod, and reduced the TIV and fine porosity (see Figs. 8 to 13).

Figs. 8 to 13 show, respectively, median pore size in microns (MPS), percent of pores less than 10 microns (PFT10um), total intrusion volume in cc/g (TIV), co-efficient of thermal expansion in 10⁻⁷/C (CTE), modulus of rupture in psi (MOR), and modulus of elasticity in psi x 10⁶ (Emod) as a function of the second fire soak temperature.

## Claims

1. A process for preparing a cordierite filter article, comprising:
a first firing of an extruded green body batch composition with first fire parameters comprising ramp rate, soak temperature, and soak time, to provide a first fired article having a first set of hydrodynamic and thermo-mechanical properties; and
a second firing of the first fired article with a second fire parameter comprising soak temperature to provide a second fired article having a second set of hydrodynamic and thermo-mechanical properties,
wherein:
a) the first firing comprises a first fire ramp rate from 1160 °C to 1350 °C at 36 °C/hr to 92 °C/hr, a soak time of 9 hrs to 21 hrs, and a soak temperature of 1403 °C to 1434 °C; and/or
b) either
(i) the second firing comprises a soak temperature of 1403 °C to provide hydrodynamic properties comprising median pore size (MPS) of 17 to 21 microns, and a percent of pore fines less than 10 micrometres (PTF10µm) of 3 to 15, and thermo-mechanical properties comprising coefficient of thermal expansion (CTE) of 3 to 5, modulus of rupture (MOR) of 265 to 330, and modulus of elasticity (Emod) of 0.4 to 0.55, or combinations thereof; or
(ii) the second firing comprises a peak soak temperature of 1410 °C to 1430 °C.

2. The process of claim 1 further comprising plugging a portion of the channels on at least one end of the first fired article.

3. The process of claim 1 wherein the first parameters and the second fire parameter achieve target filter properties selected from a median pore size (MPS), total intrusion value (TIV), percent of pores less than 10 microns (PFT10um), coefficient of thermal expansion (CTE), modulus of rupture (MOR), modulus of elasticity (Emod), or combinations thereof.

4. The process of claim 1 wherein the second fire set of thermo-mechanical properties has reduced variability compared to the first fire set of thermo-mechanical properties.

5. The process of claim 1 wherein the second fire fine pores are reduced in amount compared to the first fire fine pores.

6. The process of claim 1 wherein the first fire ramp rate, the soak time and soak temperature are selected to provide hydrodynamic filter properties comprising a median pore size (MPS) of 17 to 21 microns, and a percent of pore fines less than 10 micrometres (PTF10µm) of 4 to 18 percent, and thermo-mechanical properties comprising coefficient of thermal expansion (CTE) of from 2.5 to 9, modulus of rupture (MOR) of 260 to 440, and modulus of elasticity (Emod) of 0.4 to 0.7.

7. The process of claim 1 wherein the first fire ramp rates are from 1160 °C to 1350 °C at 50 °C/hr to 68 °C/hr, the soak times are from 11 hrs to 13 hrs, and the soak temperatures are from 1418 °C to 1431 °C, and the second fire soak has a temperature of 1410 °C to 1425 °C, to provide hydrodynamic filter properties comprising MPS of 18.5 to 20.5 microns, and PTF10µm of t 4 to 8 , and thermo-mechanical properties comprising CTE of from 2.5 to 5, MOR of 260 to 325, and Emod of 0.45 to 0.55 .

8. The process of claim 1 wherein the second fire peak soak temperature is from 1410 °C to 1425 °C, to provide a pore structure having a reduced percentage of pores finer than 10 microns of 2.5 % compared to the first fired pore properties.

9. The process of claim 1 wherein the first firing controls the pore properties of the article.

10. The process of claim 1 wherein the second firing controls thermo-mechanical properties of the article, reduces variability of the thermo-mechanical properties, and reduces the percentage of pores less than 10 microns from 0 to 5% compared to the first fired pore properties.

11. The process of claim 1, wherein:
the extruded green body is a honeycomb green body formed from a plasticized cordierite precursor batch composition containing: inorganic batch components selected from a magnesium oxide source, an alumina-forming source, a silica-forming source, or a combination thereof; a pore former having a median particle diameter greater than 40 microns; a liquid vehicle; and a binder;
first firing of the honeycomb green body converts the honeycomb green body into a ceramic honeycomb article containing cordierite; and
second firing of the ceramic honeycomb article produces a total porosity greater than 42% and less than 56% and a pore size distribution where less than 15% and more than 3% of the total porosity has a pore diameter less than 10 microns.

## Patentansprüche

1. Verfahren zur Herstellung eines Cordieritfilterartikels, umfassend:
ein erstes Brennen einer extrudierten Grünlings-Ansatzzusammensetzung mit ersten Brennparametern, umfassend eine Anstiegsrate, Durchwärmungstemperatur und Durchwärmungszeit, um einen ersten gebrannten Artikel mit einem ersten Satz hydrodynamischer und thermomechanischer Eigenschaften bereitzustellen; und
ein zweites Brennen des ersten gebrannten Artikels mit einem zweiten Brennparameter, umfassend die Durchwärmungstemperatur, um einen zweiten gebrannten Artikel mit einem zweiten Satz hydrodynamischer und thermomechanischer Eigenschaften bereitzustellen,
wobei:
a) das erste Brennen eine Erstbrenn-Anstiegsrate von 1160 °C bis 1350 °C bei 36 °C/Std. bis 92 °C/Std., eine Durchwärmungszeit von 9 Std. bis 21 Std. und eine Durchwärmungstemperatur von 1403 °C bis 1434 °C umfasst; und/oder
b) entweder
(i) das zweite Brennen eine Durchwärmungstemperatur von 1403 °C umfasst, um hydrodynamische Eigenschaften, umfassend eine mittlere Porengröße (MPS) von 17 bis 21 Mikron und einen prozentualen Anteil der Poren, die feiner als 10 Mikrometer sind (PTF10µm), von 3 bis 15, und thermomechanische Eigenschaften umfassend einen Wärmeausdehnungskoeffizienten (CTE) von 3 bis 5, ein Bruchmodul (MOR) von 265 bis 330 und ein Elastizitätsmodul (Emod) von 0,4 bis 0,55 oder Kombinationen daraus bereitzustellen; oder
(ii) das zweite Brennen eine Durchwärmungsspitzentemperatur von 1410 °C bis 1430 °C umfasst.

2. Verfahren nach Anspruch 1, ferner umfassend das Verschließen eines Teils der Kanäle an wenigstens einem Ende des ersten gebrannten Artikels.

3. Verfahren nach Anspruch 1, wobei die ersten Parameter und die zweiten Brennparameter Zielfiltereigenschaften erreichen, die aus einer mittleren Porengröße (MPS), einem Gesamteindringungswert (TIV), einem prozentualen Anteil der Poren, die feiner als 10 Mikron sind (PFT10µm), einem Wärmeausdehnungskoeffizienten (CTE), Bruchmodul (MOR), Elastizitätsmodul (Emod) oder Kombinationen daraus ausgewählt sind.

4. Verfahren nach Anspruch 1, wobei der Satz thermomechanischer Eigenschaften des zweiten Brennens im Vergleich zu dem Satz thermomechanischer Eigenschaften des ersten Brennens eine reduzierte Variabilität aufweist.

5. Verfahren nach Anspruch 1, wobei die feinen Poren des zweiten Brennens im Vergleich zu den feinen Poren des ersten Brennens hinsichtlich der Menge reduziert sind.

6. Verfahren nach Anspruch 1, wobei die Anstiegsrate, die Durchwärmungszeit und Durchwärmungstemperatur des ersten Brennens ausgewählt sind zum Bereitstellen hydrodynamischer Filtereigenschaften, umfassend eine mittlere Porengröße (MPS) von 17 bis 21 Mikron und einen prozentualen Anteil der Poren, die feiner als 10 Mikrometer sind (PTF10µm), von 4 bis 18 Prozent, und thermomechanischer Eigenschaften, umfassend einen Wärmeausdehnungskoeffizienten (CTE) von 2,5 bis 9, ein Bruchmodul (MOR) von 260 bis 440 und ein Elastizitätsmodul (Emod) von 0,4 bis 0,7.

7. Verfahren nach Anspruch 1, wobei bezüglich des ersten Brennens die Anstiegsraten von 1160 °C bis 1350 °C bei 50 °C/Std. bis 68 °C/Std. betragen, die Durchwärmungszeiten von 11 Std. bis 13 Std. betragen und die Durchwärmungstemperaturen von 1418 °C bis 1431 °C betragen, und bezüglich des zweiten Brennens die Durchwärmung eine Temperatur von 1410 °C bis 1425 °C aufweist, um hydrodynamische Filtereigenschaften, umfassend eine MPS von 18,5 bis 20,5 Mikron und einen PTF10µm von 4 bis 8, und thermomechanische Eigenschaften umfassend einen CTE von 2,5 bis 5, ein MOR von 260 bis 325 und ein Emod von 0,45 bis 0,55 bereitzustellen.

8. Verfahren nach Anspruch 1, wobei die Durchwärmungsspitzentemperatur des zweiten Brennens von 1410 °C bis 1425 °C beträgt, um eine Porenstruktur mit einem reduzierten prozentualen Anteil der Poren, die feiner als 10 Mikron sind, von 2,5 % im Vergleich zu den Poreneigenschaften des erstens Brennens bereitzustellen.

9. Verfahren nach Anspruch 1, wobei das erste Brennen die Poreneigenschaften des Artikels vorgibt.

10. Verfahren nach Anspruch 1, wobei das zweite Brennen die thermomechanischen Eigenschaften des Artikels vorgibt, die Variabilität der thermomechanischen Eigenschaften reduziert und den prozentualen Anteil der Poren, die feiner als 10 Mikron sind, von 0 bis 5 % reduziert, im Vergleich zu den Poreneigenschaften des ersten Brennens.

11. Verfahren nach Anspruch 1, wobei:
der extrudierte Grünling ein Wabenform-Grünling ist, der aus einer plastifizierten Cordierit-Vorläuferansatzzusammensetzung ausgebildet ist, die Folgende enthält: anorganische Ansatzkomponenten, ausgewählt aus einer Magnesiumoxidquelle, einer Aluminiumoxid-bildenden Quelle, einer Siliziumdioxid-bildenden Quelle oder einer Kombination daraus; einen Porenbildner mit einem mittleren Partikeldurchmesser von über 40 Mikron; eine flüssige Trägersubstanz; und ein Bindemittel;
das erste Brennen des Wabenform-Grünlings den Wabenform-Grünling in einen Cordierit enthaltenden Wabenform-Keramikartikel umwandelt; und
das zweite Brennen des Wabenform-Keramikartikels eine Gesamtporosität von über 42 % und unter 56 % und eine Porengrößenverteilung, bei welcher weniger als 15 % und mehr als 3 % der Gesamtporosität einen Porendurchmesser von unter 10 Mikron aufweist, erzeugt.

## Revendications

1. Procédé de préparation d'un article de filtre en cordiérite, comprenant :
une première cuisson d'une composition de mélange d'ébauche crue extrudée en faisant intervenir des premiers paramètres de cuisson comprenant une montée en température, une température de cuisson ralentie et un temps de cuisson ralentie, de façon à obtenir un article de première cuisson ayant un premier ensemble de propriétés hydrodynamiques et thermomécaniques ; et
une seconde cuisson de l'article de première cuisson en faisant intervenir un second paramètre de cuisson comprenant une température de cuisson ralentie de façon à obtenir un article de seconde cuisson ayant un second ensemble de propriétés hydrodynamiques et thermomécaniques,
dans lequel :
a) la première cuisson comprend une première montée en température de cuisson de 1160 °C à 1350 °C à 36 °C/h à 92 °C/h, un temps de cuisson ralentie de 9 h à 21 h, et une température de cuisson ralentie de 1403 °C à 1434 °C ; et/ou
b) soit
(i) la seconde cuisson comprend une température de cuisson ralentie de 1403 °C permettant d'obtenir des propriétés hydrodynamiques comprenant une taille de pores moyenne (MPS) de 17 à 21 microns, et un pourcentage de finesse de pores inférieur à 10 micromètres (PTF10µm) de 3 à 15, et des propriétés thermomécaniques comprenant un coefficient de dilatation thermique (CTE) de 3 à 5, un module de rupture (MOR) de 265 à 330 et un module d'élasticité (Emod) de 0,4 à 0,55, ou des combinaisons de ces derniers ; soit
(ii) la seconde cuisson comprend une température de cuisson ralentie maximale de 1410 °C à 1430 °C.

2. Procédé selon la revendication 1, comprenant en outre l'obturation d'une partie des canaux d'au moins une extrémité de l'article de première cuisson.

3. Procédé selon la revendication 1, dans lequel les premiers paramètres et le second paramètre de cuisson permettent d'obtenir des propriétés de filtre cibles sélectionnées parmi une taille de pores moyenne (MPS), une valeur d'intrusion totale (TIV), un pourcentage de pores inférieurs à 10 microns (PFT10µm), un coefficient de dilatation thermique (CTE), un module de rupture (MOR), un module d'élasticité (Emod), ou des combinaisons de ces derniers.

4. Procédé selon la revendication 1, dans lequel l'ensemble de propriétés thermomécaniques de seconde cuisson a une variation réduite par comparaison avec l'ensemble de propriétés thermomécaniques de première cuisson.

5. Procédé selon la revendication 1, dans lequel les pores fins de seconde cuisson sont en quantité réduite par comparaison avec les pores fins de première cuisson.

6. Procédé selon la revendication 1, dans lequel la montée en température de première cuisson, le temps de cuisson ralentie et la température de cuisson ralentie sont sélectionnés de façon à obtenir des propriétés de filtre hydrodynamiques comprenant une taille de pores moyenne (MPS) de 17 à 21 microns, et un pourcentage de finesse de pores inférieur à 10 micromètres (PTF10µm) de 4 à 18 pourcent, et des propriétés thermomécaniques comprenant un coefficient de dilatation thermique (CTE) de 2,5 à 9, un module de rupture (MOR) de 260 à 440 et un module d'élasticité (Emod) de 0,4 à 0,7.

7. Procédé selon la revendication 1, dans lequel les montées en température de première cuisson vont de 1160 °C à 1350 °C à 50 °C/h à 68 °C/h, les temps de cuisson ralentie vont de 11 h à 13 h et les températures de cuisson ralentie vont de 1418 °C à 1431 °C, et la cuisson ralentie de seconde cuisson se fait à une température de 1410 °C à 1425 °C, de façon à obtenir des propriétés de filtre hydrodynamiques comprenant une MPS de 18,5 à 20,5 microns, et un PTF10µm de 4 à 8, et des propriétés thermomécaniques comprenant un CTE de 2,5 à 5, un MOR de 260 à 325 et un Emod de 0,45 à 0,55.

8. Procédé selon la revendication 1, dans lequel la température cuisson ralentie maximale de seconde cuisson va de 1410 °C à 1425 °C, de façon à obtenir une structure de pores ayant un pourcentage réduit de pores de finesse inférieure à 10 microns de 2,5 % par comparaison avec les propriétés de pores de première cuisson.

9. Procédé selon la revendication 1, dans lequel la première cuisson commande les propriétés de pores de l'article.

10. Procédé selon la revendication 1, dans lequel la seconde cuisson commande des propriétés thermomécaniques de l'article, réduit la variation des propriétés thermomécaniques et réduit le pourcentage de pores ayant une finesse inférieure à 10 microns de 0 à 5 % par comparaison avec les propriétés de pores de première cuisson.

11. Procédé selon la revendication 1, dans lequel :
l'ébauche crue extrudée est une ébauche crue en nid d'abeilles formée à partir d'une composition de mélange de précurseur de cordiérite recouverte de plastique contenant : des constituants de mélange inorganiques sélectionnés à partir d'une source d'oxyde de magnésium, d'une source de formation d'aluminoxyde, d'une source de formation de silice, ou d'une combinaison de ces dernières ; un agent porogène ayant un diamètre de particules moyen supérieur à 40 microns ; un véhicule liquide ; et un liant ;
la première cuisson de l'ébauche crue en nid d'abeilles transforme l'ébauche crue en nid d'abeilles en un article en céramique en nid d'abeilles contenant de la cordiérite ; et
la seconde cuisson de l'article en céramique en nid d'abeilles donne une porosité totale supérieure à 42 % et inférieure à 56 % et une répartition de tailles de pores selon laquelle moins de 15 % et plus de 3 % de la porosité totale a un diamètre de pores inférieur à 10 microns.
